# EUROPEAN PATENT APPLICATION

(11) **EP 2 527 993 A1**
(43) Date of publication of application: **28.11.2012**
(21) Application number: 11771762.9
(22) Date of filing: 20.04.2011
(51) Int. Cl.: G06F 17/30, G06Q 10/00

(54) **DATABASE, WORK CONTENT DATA MANAGEMENT SERVER AND WORK CONTENT DATA MANAGEMENT PROGRAM**

(30) Priority: 20.04.2010 JP 2010096975
(71) Applicant: IPS Co., Ltd., Kobe-shi, Hyogo 650-0044 (JP)
(72) Inventor: AKITA, Toshifumi, Kobe-shi Hyogo 650-0044 (JP)
(74) Representative: Maggs, Michael Norman
(86) International application number: PCT/JP2011/002326
(87) International publication number: WO 2011/132421

(57) **Abstract**

It is allowed to establish a system by which it is possible to make an inquiry into a variety of reports at a low cost without requiring a complex report program. A database (for example, a cube group memory 100) for storing business content data (for example, report data) representing the content of business in a business process includes: a one-dimensional cube for storing unit business content data for each business unit as one-dimensional data among the business content data, the unit business content data represents the content of each business for the business unit in the business process; and a two-dimensional cube for storing related business content data for each related business as two-dimensional data in the content of each business represented by the one-dimensional data stored in the one-dimensional cube, the related business content data integratively representing the content of predetermined related business performed over a plurality of business units.

## Description

### CROSS REFERENCE TO RELATED APPLICATIONS

The present application is a U.S. national phase application under 35 U.S.C. §371 of PCT Application No. PCT/JP2011/002326, filed on April 20, 2011, and claims priority to and incorporates by reference Japanese Patent Application No. 2010-096975, filed on April 20, 2010.

### Technical Field

The present invention relates to a database for storing business content data representing the content of businesses in a business process, a business content data management server for managing the business content data stored in the database, and a business content data management program that is installed in the business content data management server.

### Background Art

Heretofore, one so-called ERP (Enterprise Resource Planning) has become mainstream as package software for establishing a core business system for a company. In a core business system in which this ERP is contained, it is most often constructed on a relational database, and an application program is mostly designed by focusing on business processes. Thus, it is often operated without focusing on a report output.

Under such a situation, for the purpose of processing the large amount of business data at a high speed, analyzing the business data from various angles, and outputting reports, various data warehouse systems that undertake a complementary role to the core business system have been provided (see Patent Literature 1).

### Prior Art Literature

### Patent Literature

Patent Literature 1: Japanese Patent Application Publication No. 2002-312208

### Summary of the Invention

### Problems to be solved by the Invention

However, since the conventional data warehouse system manages business data of each business acquired from a core business system side, the conventional data warehouse system can merely provides report data on each business. For this reason, there has been a problem that the conventional data warehouse system may not provide report data on plural kinds of businesses for grasping progress of the business and the like.

On the other hand, in order to manage report data on plural kinds of businesses, there is a need to newly develop a complex program for managing reports and to contain it therein. Therefore, a development cost and an operational cost become enormous. For this reason, it has been found difficult to realize a system for managing report data on plural kinds of businesses.

It is an object of the present invention to resolve the problems described above and to provide report data on plural kinds of businesses at a low cost without requiring a complex program for managing reports.

### Means for Solving the Problems

According to the present invention, there is provided a database for storing business content data representing the content of business in a business process, the database including: a one-dimensional data memory for storing unit business content data for each business unit as one-dimensional data among the business content data, the unit business content data representing the content of the business for each business unit in the business process; and a two-dimensional data memory for storing related business content data for each related business as two-dimensional data in the content of each business represented by the one-dimensional data stored in the one-dimensional data memory, the related business content data integratively representing the content of predetermined related business performed over a plurality of business units.

By configuring it as described above, it becomes possible to provide report data on plural kinds of businesses at a low cost without requiring a complex program for managing reports.

The database may be configured so as to further include a multi-dimensional data memory for storing serial business content data for each series of businesses as multi-dimensional data, the serial business content data representing the content of a series of predetermined businesses in which the content of related business represented by the two-dimensional data stored in the two-dimensional data memory is integrated with the content of business represented by the one-dimensional data stored in the one-dimensional data memory or the content of other related business represented by other two-dimensional data.

The database may be configured so that the multi-dimensional data contains serial business content data of a series of businesses including the content of another series of businesses represented by other multi-dimensional data.

The database may be provided in a business content data management server for managing the business content data, and the business content data management server may be configured so as to include: a unit business content data acquiring section that acquires unit business content data from a unit business content data management server for collecting the unit business content data; a first updating section that registers, as one-dimensional data, the unit business content data acquired by the unit business content data acquiring section in the one-dimensional data memory so as to update registered content of the one-dimensional data memory; and a second updating section that reflects a registration result of the one-dimensional data registered by the first updating section to two-dimensional data which are related business content data regarding related businesses so as to update registered content of the two-dimensional data memory in the case where there are related businesses performed over a plurality of business units including the content of the business represented by the one-dimensional data registered by the first updating section.

The business content data management server may be configured so as to further include a business content data providing section that provides the business content data stored in the database in response to a request from a client terminal wherein the business content data providing section provides one-dimensional data or two-dimensional data designated by the client terminal.

Further, according to the present invention, there is provided a business content data management server for managing business content data representing the content of business in a business process, the business content data management server including: a database for storing the business content data; a unit business content data acquiring section that acquires unit business content data from a unit business content data management server for collecting unit business content data for each business unit, the unit business content data representing the content of each business for each business unit in the business process; a unit business content data storing section that stores the unit business content data acquired by the unit business content data acquiring section in the database; and a business content data providing section that provides the business content data stored in the database in response to a request from a client terminal, in which the database includes: a one-dimensional data memory for storing the unit business content data of the business content data as one-dimensional data, and a two-dimensional data memory for storing related business content data for each related business as two-dimensional data in the content of each business represented by the one-dimensional data stored in the one-dimensional data memory, the related business content data integratively representing the content of predetermined related business performed over a plurality of business units, and the business content data providing section provides at least a portion of the one-dimensional data or the two-dimensional data as the business content data.

Moreover, according to the present invention, there is provided a business content data management program for causing a business content data management server to manage business content data, the business content data management server including a database for storing business content data representing the content of business in a business process, in which: the business content data management program causes the business content data management server to execute: a unit business content data acquiring process of acquiring unit business content data from a unit business content data management server for collecting unit business content data for each business unit, the unit business content data representing the content of each business for each business unit in the business process; a unit business content data storing process of storing the unit business content data acquired through the unit business content data acquiring process in the database; and a business content data providing process of providing the business content data stored in the database in response to a request from a client terminal, wherein the database includes: a one-dimensional data memory for storing the unit business content data of the business content data as one-dimensional data; and a two-dimensional data memory for storing related business content data for each related business as two-dimensional data in the content of each business represented by the one-dimensional data stored in the one-dimensional data memory, the related business content data integratively representing the content of the related business performed over a plurality of business units, and wherein the business content data providing process includes a process of providing at least a portion of the one-dimensional data or the two-dimensional data as the business content data.

### Effects of the Invention

According to the present invention, it becomes possible to provide report data on the plural kinds of businesses at a low cost without requiring a complex program for managing reports.

### Brief Description of the Drawings

FIG. 1 is a block diagram illustrating a configuration example of a report inquiry system according to an embodiment of the present invention.
FIG. 2 is an explanatory drawing for explaining the association among various kinds of cubes.
FIG. 3 is a flowchart illustrating an example of a slip data registering process.
FIG. 4 is a flowchart illustrating an example of a report outputting process.
FIG. 5 is an explanatory drawing illustrating an example of a cube selection screen.
FIG. 6 is an explanatory drawing illustrating an example of a registered item display screen.
FIG. 7 is an explanatory drawing illustrating an example of the registered item selection screen.
FIG. 8 is an explanatory drawing illustrating an example of a report display screen.
FIG. 9 is an explanatory drawing illustrating another example of the report display screen.

### Mode for Carrying out the Invention

Hereinafter, an example of one embodiment according to the present invention will be described with reference to the drawings.

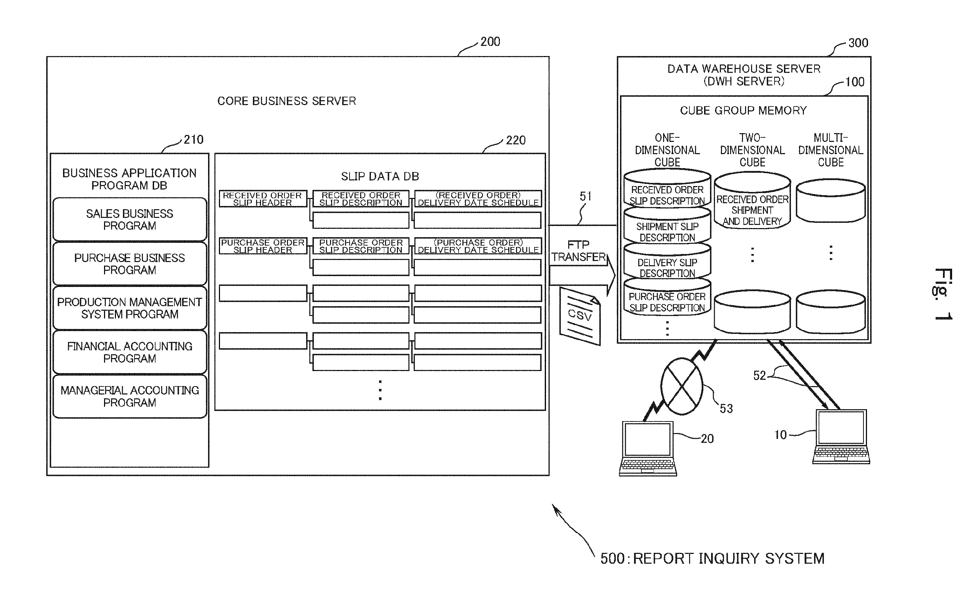

FIG. 1 is a block diagram illustrating a configuration example of a report inquiry system 500 according to an embodiment of the present invention. As shown in FIG. 1, the report inquiry system 500 includes a core business server 200, a data warehouse server (DWH server) 300, a client 10, and a client 20. The individual components constituting the report inquiry system 500 are connected to each other by a communication network.

In the present embodiment, the core business server 200 is connected to the DWH server 300 by means of a dedicated line 51. Further, the client 10 is connected to the DWH server 300 by means of a LAN (Local Area Network) 52. Furthermore, the client 20 is connected to the DWH server 300 by means of the Internet 53.

The core business server 200 is a server managed by a data collector that is a collection target of report data, for example, and has various kinds of functions for managing report information on various kinds of businesses. The core business server 200 is configured by a general information-processing apparatus including an OS (Operating System) and a relational DB. Here, the report is the general term of books and a type of slip. In this regard, the books denote one in which matters concerning accounts of money or goods are filled, and the slip denotes data which becomes a basis for creating books and constitutes evidence of transactions and the like on a business. In the present embodiment, the case where the core business server 200 deals with only the slip data as report data will be described as an example.

In the present embodiment, the core business server 200 includes a business application program DB 210 and a slip data DB 220.

The business application program DB 210 is a storage medium for storing programs used for various kinds of businesses. A sales business managing program, a sales business managing program, a production managing program, a financial accounting managing program, a managerial accounting managing program, and the like are included in the programs stored in the business application program DB 210.

The slip data DB 220 is a storage medium for storing various kinds of slip data collected and marshaled by means of various kinds of information processing using various kinds of programs stored in the business application program DB 210. In the slip data DB 220, for example, received order slip header information, received order slip description information, delivery date schedules, and the like are associated with slip data corresponding to a received order slip, and they are stored in a structure capable of retrieving on the basis of a key, such as a slip number.

Further, the core business server 200 has a function to convert the various kinds of data stored in the slip data DB 220 into a CSV (Comma Separated Values) format in accordance with a predetermined extraction condition and a function to transmit the converted data to the DWH server 300. Furthermore, in the present embodiment, the core business server 200 transfers a CSV formed data file to the DWH server 300 on the basis of the FTP (File Transfer Protocol).

The DWH server 300 is a server managed by a system manager of the present system, for example, and has various kinds of functions for realizing a data warehouse. Here, the data warehouse denotes a system to analyze the association among the individual items from among business data such as report data accumulated in time series. Further, the DWH server 300 has a function to register the slip data in a predetermined storage region corresponding to the transferred slip data by converting the file with a CSV format transferred from the core business server 200 into a predetermined data format and the like. Here, the DWH server 300 may be configured to register the slip data in the predetermined storage region as is left in a state of the CSV format without carrying out conversion of the data format. Moreover, in the present embodiment, the DWH server 300 carries out processes to: extract predetermined data (that is, data corresponding to data which stored in a one-dimensional cube) from the slip data transferred from the core business server 200; register the predetermined data only in one-dimensional cubes described below; and reflect a registration result in the one-dimensional cubes to cubes belonging to the other dimensions. In this regard, the data to be registered in the one-dimensional cubes are one obtained by extracting the predetermined data from the received slip data. The data may be data obtained by simply accumulating slip data and data generated as book data on the basis of the slip data. For this reason, in the present embodiment, data stored in the cubes are generally called as "report data".

In the present embodiment, the DWH server 300 includes a cube group memory 100 in which a plurality of cubes meaning units of storage areas or a database are provided.

The cube group memory 100 is a database for storing slip data transferred from the core business server 200 in a predetermined format, and is composed of a plurality of cubes with defined hierarchies.

In the present embodiment, the cube group memory 100 is composed of one-dimensional cubes representing cubes of a first-order hierarchy for storing report data of each business transferred from the core business server 200, two-dimensional cubes representing cubes of a second-order hierarchy, which is a hierarchy lower than the first-order hierarchy, and multi-dimensional cubes representing cubes of a multi-order hierarchy, which is third-order and higher-order hierarchies lower than the second-order hierarchy.

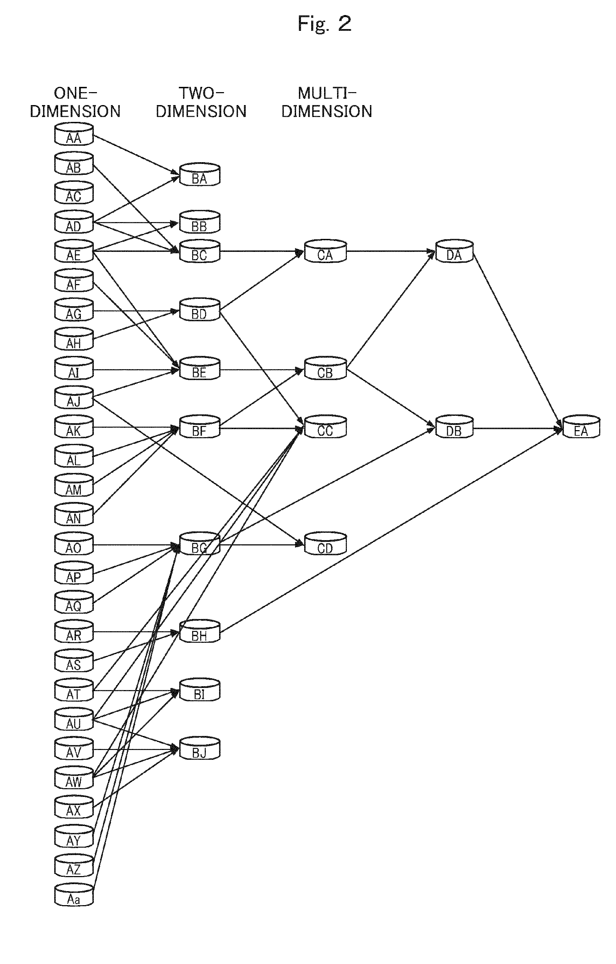

FIG. 2 is an explanatory drawing for explaining the association among the various kinds of cubes constituting the cube group memory 100. The cubes of the respective dimensions managed in the cube group memory 100 have a hierarchical structure as shown in FIG. 2, for example. In the present embodiment, it is assumed that a cube of a lower dimension is positioned at a higher hierarchy in the hierarchical structure.

In the one-dimensional cubes, report data according to the content of each business for every business unit in a business process corresponding to a business application program is stored as one-dimensional data of all of report data. In other words, in the one-dimensional cubes, for example, report data according to the content of each business, such as a received order slip description, a shipment slip description, a delivery slip description, and a purchase order slip description are stored.

In the two-dimensional cubes, among the content of the individual businesses respectively represented by the one-dimensional data, report data according to related business content for every related business integratively representing the content of predetermined related business for a plurality of business units are stored as two-dimensional data. In other words, in the two-dimensional cubes, for example, report data integratively representing the content of predetermined related business such as received order, shipment and delivery (business associated with received order, shipment, and delivery) are stored.

The multi-dimensional cube is a cube in which report data of a series of businesses performed over the respective businesses represented by each of the report data stored in a plurality of cubes including the two-dimensional cubes or other multi-dimensional cubes are stored as the multi-dimensional data.

In other words, in the multi-dimensional cube, for example, report data according to serial business content for each series of businesses representing the content of a series of predetermined businesses, in which the content of related business represented by the two-dimensional data and the content of business represented by the one-dimensional data or the content of other related business represented by other two-dimensional data have been integrated, are stored as multi-dimensional data. For example, in the multi-dimensional cubes, report data integratively representing the content of a series of predetermined businesses such as sales, purchase, management, and the like are stored.

Further, as shown in FIG. 2, in the multi-dimensional data, report data according to serial business content of a series of businesses including the content of another series of businesses represented by other multi-dimensional data may be stored as multi-dimensional data. In this case, even among the multi-dimensional cubes, a hierarchical structure is formed.

In the present embodiment, it is assumed that a cube of a lower hierarchy is associated in advance with a plurality of cubes of upper hierarchies in which report data used to generate the report data stored in the lower hierarchy are respectively stored, as shown by arrows in FIG. 2. In the cube of the lower hierarchy, report data obtained by integrating the report data respectively stored in the associated cubes of the upper hierarchies are stored. It is assumed that this association is defined in advance by the system manager in accordance with the association of individual businesses, the content of required reports and the like.

More specifically, for example, in FIG. 2, in the case where one-dimensional cubes AO, AP, AQ, AY, AZ, and Aa are cubes for storing report data respectively regarding inventory status information, article evaluation, received order inventory evaluation, received order inventory, lot inventory, and special inventory from a supplier, report data obtained by integrating the report data respectively stored in the one-dimensional cubes AO, AP, AQ, AY, AZ, and Aa are stored in a two-dimensional cube BG associated in common with the one-dimensional cubes AO, AP, AQ, AY, AZ, and Aa. In this case, the report data stored in the two-dimensional cube BG become report data representing "inventory management", for example.

Further, report data obtained by integrating the report data of the two-dimensional cube BG with report data of a one-dimensional cube AJ (report data on an acceptance or delivery description) are stored in a multi-dimensional cube CD. In the present embodiment, it is assumed that the report data stored in the multi-dimensional cube CD are report data according to "inventory receipts and payments".

It is preferable that, in the two-dimensional cubes and the multi-dimensional cubes, report data with high needs of those who want to integratively grasp report data of a plurality of related businesses are stored. The association among the individual cubes is set up in advance. When data stored in a one-dimensional cube are updated, data stored in a two-dimensional cube and a multi-dimensional cube each positioned in hierarchies lower than the updated one-dimensional cube are also updated.

Since it is configured so that necessary two-dimensional cubes and multi-dimensional cubes are provided in advance in this manner, it becomes possible to eliminate a need to carry out a work for generating data corresponding to the report data stored in the two-dimensional cubes and the multi-dimensional cubes.

Each of the clients 10, 20 is an information-processing apparatus provided with a CPU (Central Processing Unit), a ROM, a RAM, a display screen, and the like. In the present embodiment, it is assumed that each of the clients 10, 20 has various kinds of applications available to deal with report data, such as a Web browser, spreadsheet software, and the like. Further, in the present embodiment, each of the clients 10, 20 has a function to define a query (a cube name to be referenced, an item name to be used, report layout information, an extraction condition, and the like) for acquiring necessary report data from the DWH server 300, for example, in response to an operational input by a user and a function to transmit the defined query to the DWH server 300.

In the present embodiment, the client 10 has a function to communicate with the DWH server 300 via a LAN and a function to output the data acquired from the DWH server 300 onto the display screen by means of predetermined spreadsheet software.

Further, the client 20 has a function to communicate with the DWH server 300 via the Internet and a function to output the data acquired from the DWH server 300 onto the display screen by means of the Web browser.

Next, an operation of the core business server 200 and the DWH server 300 in the report inquiry system 500 according to the present embodiment will be described with reference to the drawings. The content of operations and processes particularly with no relationship to the present invention may be omitted.

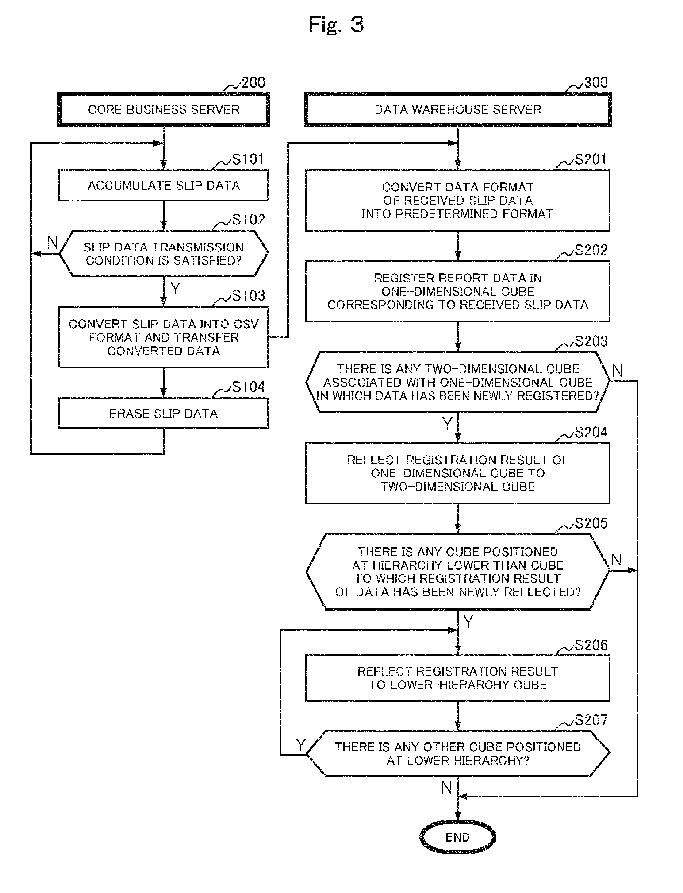

FIG. 3 is a flowchart illustrating an example of a slip data registering process carried out by the core business server 200 and the DWH server 300. In the slip data registering process, a process to extract predetermined data from the slip data accumulated by the core business server 200 and to store the extracted data in the cube group memory 100 included in the DWH server 300 is carried out.

In the slip data registering process, the core business server 200 first accumulates slip data in the slip data DB 220 (Step S101).

The core business server 200 then determines whether a predetermined slip data transmitting condition is satisfied or not at predetermined time intervals, for example (Step S102). In this regard, it is assumed that the slip data transmitting condition is stored in advance in a memory included in the core business server 200, and "after 1:00 a.m." and the like are to be set up, for example. Here, in the case where it is determined that the slip data transmitting condition is not satisfied ("No" at Step S102), the core business server 200 continues to accumulate the slip data.

On the other hand, in the case where it is determined that the slip data transmitting condition is satisfied ("Yes" at Step S102), the core business server 200 converts the slip data into a CSV format and transfers the converted data to the DWH server 300 (Step S103). The file format when to transfer the slip data needs only to be a format that can be processed by the DWH server 300, and it may be any format other than the CSV format.

When the slip data are transferred, the core business server 200 erases the transferred slip data from the slip data DB 220 (Step S104), and proceeds to Step S101. The core business server 200 may be configured such that the transferred slip data are left as already transferred data in the case where the amount of data of the slip data does not exceed a predetermined amount, for example. Further, the core business server 200 may be configured such that the transferred slip data are caused to be stored in another storage medium other than the DHW server 300. Furthermore, the core business server 200 may be configured: to accumulate all of the slip data so as to be capable of distinguishing whether each of the slip data is already transferred data or not; to transfer only untransferred data of the accumulated slip data at Step S103; and not to carry out erasure thereof at Step S104.

On the other hand, in the case where the slip data are received, the DWH server 300 converts the data format into a predetermined format (Step S201), and extracts data corresponding to each of the one-dimensional cubes from the slip data to register the extracted data in the corresponding one-dimensional cube (Step S202). In the case where there is an arithmetic item in items of the report data of the one-dimensional cube to be registered, the DWH server 300 carries out an arithmetic process according to an arithmetic expression (an arithmetic expression using one or more other items of the report data) set up in advance to the arithmetic item at Step S201, and carries out a process of setting up an arithmetic result for the arithmetic item at Step S202. By carrying out the processes in this manner, it is possible to eliminate a need to carry out an arithmetic process when to provide the report data, and this makes it possible to eliminate a need for an arithmetic program for that process.

When the data are registered in the one-dimensional cube (that is, when data in the cube are updated), the DWH server 300 determines whether there is any two-dimensional cube associated with the one-dimensional cube in which the data has been newly registered or not (Step S203). Here, in the case where it is determined that there is no two-dimensional cube associated with the one-dimensional cube in which the data has been newly registered ("No" at Step S203), the DWH server 300 finishes the process herein.

On the other hand, in the case where it is determined that there is a two-dimensional cube associated with the one-dimensional cube in which the data has been newly registered ("Yes" at Step S203), the DWH server 300 reflects a registration result of the one-dimensional cube to the two-dimensional cube (Step S204). In the case where there is an arithmetic item in items of the report data of the two-dimensional cube to be registered, at Step S204, the DWH server 300 carries out an arithmetic process according to an arithmetic expression (arithmetic expression using one or more other items of the report data) set up in advance for the arithmetic item, and carries out a process to set up an arithmetic result to the arithmetic item.

Subsequently, the DWH server 300 determines whether there is any cube (lower-hierarchy cube) positioned at a hierarchy lower than that of the cube to which the registration result of the data has been newly reflected or not (Step S205). Here, in the case where it is determined that there is no cube positioned at a hierarchy lower than that of the cube to which the registration result of the data has been newly reflected ("No" at Step S205), the DWH server 300 finishes the process herein.

On the other hand, in the case where it is determined that there is a cube positioned at a hierarchy lower than that of the cube to which the registration result of the data has been newly reflected ("Yes" at Step S205), the DWH server 300 reflects the registration result of the data to the lower-hierarchy cube (Step S206). In the case where there is an arithmetic item in the items of the report data of the lower-hierarchy cube to be registered, at Step S206, the DWH server 300 carries out an arithmetic process according to an arithmetic expression (arithmetic expression using one or more other items of the report data) set up in advance for the arithmetic item, and carries out a process to set up an arithmetic result to the arithmetic item.

When the registration result of the data is reflected to the lower-hierarchy cube, the DWH server 300 determines whether there is any other cube positioned at a hierarchy further lower than the hierarchy (Step S207).

Here, in the case where it is determined that there is no cube positioned at the further lower hierarchy ("No" at Step S207), the DWH server 300 finishes the process herein. In the case where it is determined that there is a cube positioned at the further lower hierarchy ("Yes" at Step S207), the DWH server 300 proceeds to Step S206.

Next, operations of the DWH server 300 and the clients 10 and 20 in the report inquiry system 500 according to the present embodiment will be described with reference to the drawings. The content of operations and processes particularly with no relationship to the present invention may be omitted.

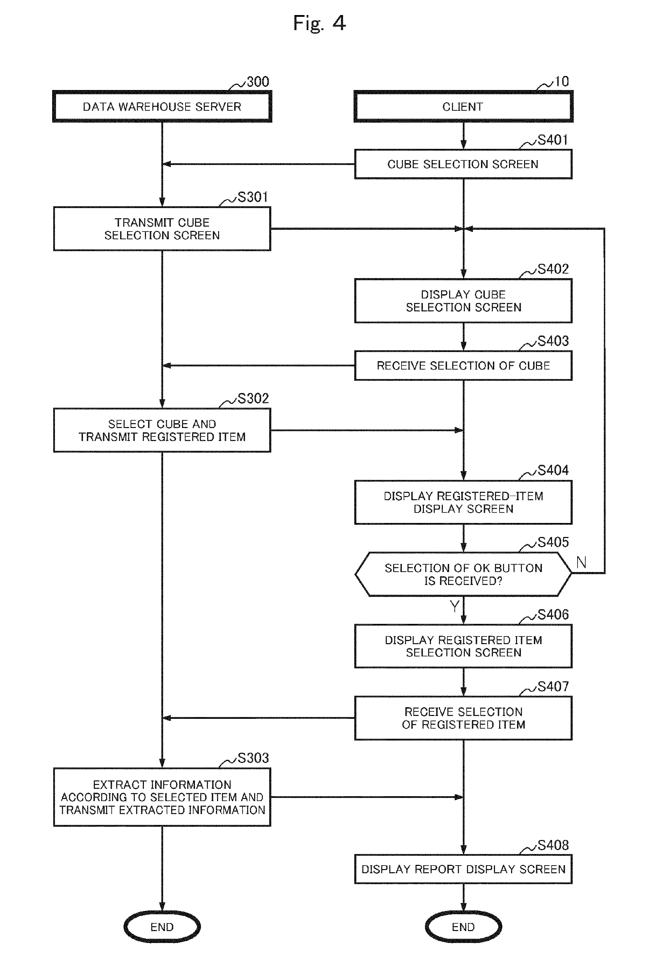

FIG. 4 is a flowchart illustrating an example of a report outputting process carried out by the DWH server 300 and the client 10. In the report outputting process, a process to extract arbitrary data from the cube group memory 100 of the DWH server 300 and a process to output the extracted data as a report in the client 10 are carried out. Since the client 10 and the client 20 are different from each other only in the kinds of communication networks and the kinds of applications for outputting reports, the case of using the client 10 will be described as an example in the present embodiment.

In the report outputting process, the client 10 first transmits a cube selection screen request to the DWH server 300 in response to a manipulation input by a user, for instance (Step S401).

When the cube selection screen request is received, the DWH server 300 transmits a cube selection screen in response to the received cube selection screen request. In the present embodiment, the DWH server 300 transmits data for displaying a screen including a list of names of cubes according to a query generated in the client 10 to the client 10 as the cube selection screen.

When the cube selection screen is received, the client 10 displays the cube selection screen on a display screen (Step S402). By displaying the cube selection screen including the list of the names of the cubes according to the query in this manner, it is possible to comprehensively view the cubes in response to the request, and thus it is possible to easily select a cube (that is, a report).

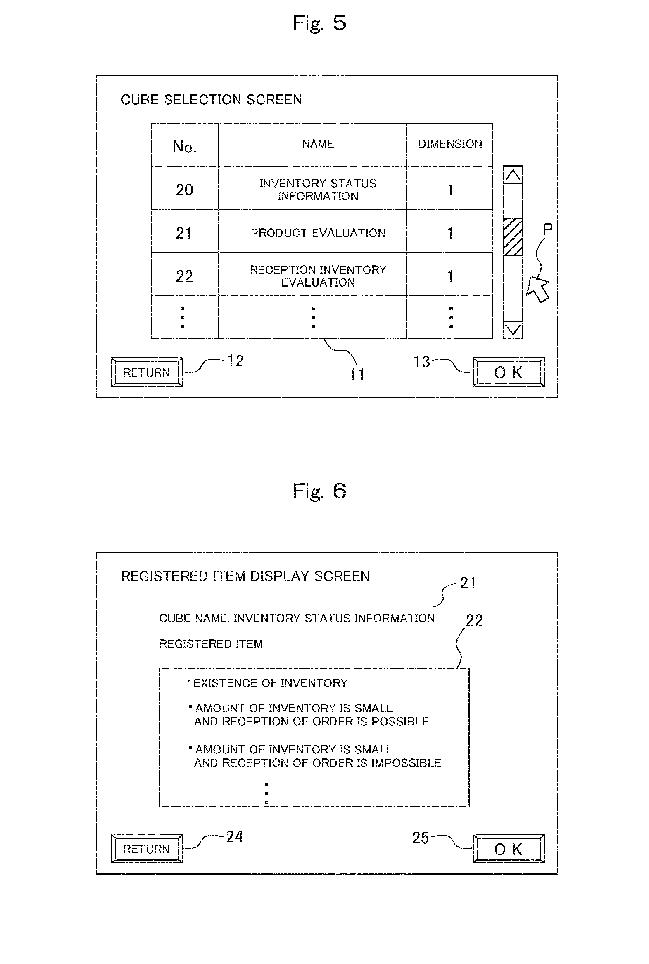

FIG. 5 is an explanatory view illustrating an example of the cube selection screen. As illustrated in FIG. 5, the cube selection screen includes: a cube information display area 11 for displaying information on cubes in the form of a list; a return button 12 for receiving a request to switch the screen displayed on the display screen to another screen; and an OK button 13.

In the present embodiment, in the cube information display area 11, numbers (No.) of cubes, names (NAME) of the cubes, and dimensions (DIMENSION) to which the cubes respectively belong are displayed in a selectable state.

When selection of a cube (for example, selection of a cube name) by means of a cursor P manipulable by manipulation on a mouse, for instance, is received, the client 10 causes the selected cube to become a temporarily selected state. Then, when selection of the OK button 13 is received, the client 10 determines that the selection of the cube in the temporarily selected state is received (Step S403), and transmits the cube name of the selected cube to the DWH server 300.

When the cube name is received, the DWH server 300 searches for a cube according to the received cube name, and transmits registered items stored in the cube to the client 10 (Step S302). Here, the registered items are a portion of report data stored in each cube, and necessary items as a report are registered in advance for the content of each business. In the present embodiment, the case where registered items, such as "EXISTENCE OF INVENTORY", "AMOUNT OF INVENTORY IS SMALL AND RECEIVED ORDER IS POSSIBLE", "AMOUNT OF INVENTORY IS SMALL AND RECEIVED ORDER IS IMPOSSIBLE", and the like, stored in the one-dimensional cube AO are transmitted to the client 10 will be described as an example.

When the registered items are received, the client 10 displays a registered item display screen on the display screen (Step S404).

FIG. 6 is an explanatory view illustrating an example of the registered item display screen. As illustrated in FIG. 6, the registered item display screen includes: a cube name display area 21; a registered item display area 22; a return button 24; and an OK button 25.

In the present embodiment, the client 10 displays the registered items received from the DWH server 300, in the registered item display area 22. Here, in the case where selection of the return button 24 by the cursor P, for instance, is received ("No" at Step S405), the client 10 proceeds to Step S402.

On the other hand, in the case where selection of the OK button 25 by the cursor P, for instance, is received ("Yes" at Step S405), the client 10 displays a registered item selection screen (Step S406).

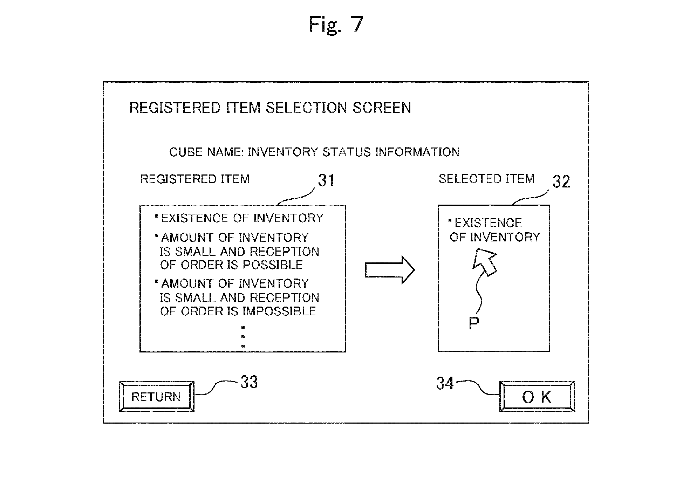

FIG. 7 is an explanatory view illustrating an example of the registered item selection screen. As illustrated in FIG. 7, the registered item selection screen includes: a registered item display area 31 for displaying registered items in a selectable form; a selected item display area 32 for displaying items selected from the items displayed as the registered items by the user; a return button 33; and an OK button 34.

Here, when selection of the OK button 34 is received in a state in which a selected item has been set up by dragging a registered item by means of the cursor P, for instance, the client 10 determines that the selection of the registered item is received (Step S407), and transmits the selected item thus set up to the DWH server 300.

When the selected item is received, the DWH server 300 extracts report data according to the selected item from the cube, transmits the extracted report data to the client 10 (Step S303), and finishes the process herein.

When the report data extracted from the cube are received, the client 10 displays a report display screen (Step S408).

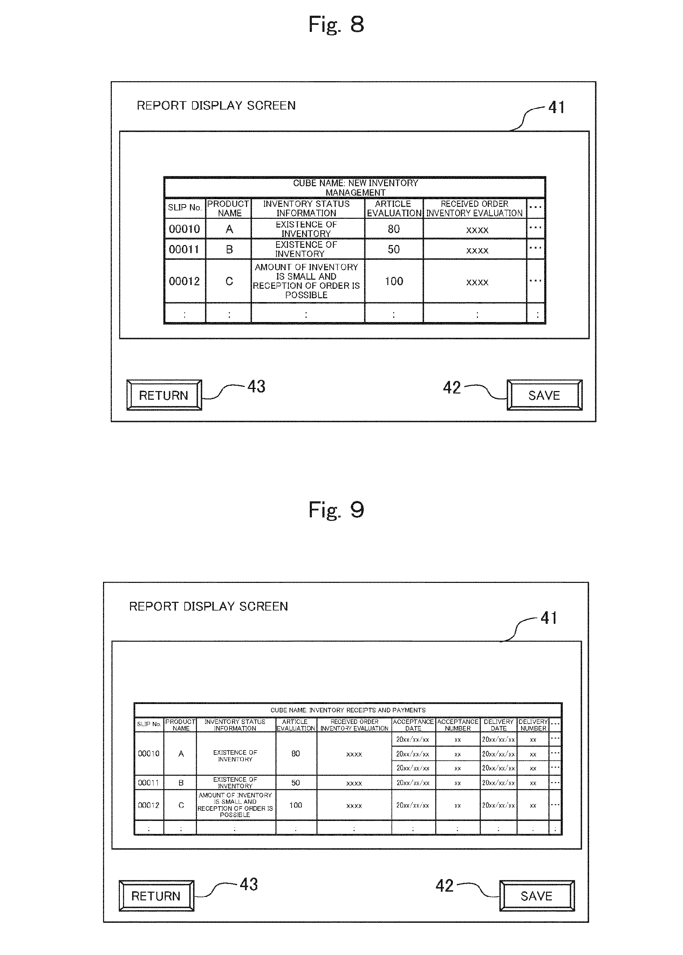

FIG. 8 is an explanatory view illustrating an example of the report display screen in the case where the report data received by the client 10 are report data stored in a two-dimensional cube. For example, as illustrated in FIG. 8, the report display screen includes: a report display area 41 for displaying the report data received from the DWH server 300; a save button 42 for receiving a request to save (or store) the report data displayed in the report display area 41 in a storage medium of the client 10; and a return button 43 for returning to the state of the previous screen.

For example, in the case where, report data according to "new inventory management", in which the inventory status information, the article evaluation, and the received order inventory evaluation have been integrated, among report data stored in a one-dimensional cube are displayed, report data regarding the new inventory management are displayed as illustrated in FIG. 8.

Further, in the case where report data according to "inventory receipts and payments", in which report data stored in a one-dimensional cube and report data stored in a two-dimensional cube have been integrated, are displayed, it may be configured so that a character size is adjusted to display all of the report data in the report display area 41 as illustrated in FIG. 9, for instance. Furthermore, the client 10 may be configured such that the display state can be changed in response to manipulation on the mouse, for instance.

In the embodiment described above, the case where the cube group memory 100 includes the one-dimensional cubes, the two-dimensional cubes and the multi-dimensional cubes has been described. However, the cube group memory 100 may be configured by the one-dimensional cubes and the two-dimensional cubes without including the multi-dimensional cubes.

As described above, in the embodiment described above, the database (for example, the cube group memory 100) for storing business content data (for example, the report data) representing the content of business in a business process is configured so as to include: the one-dimensional cubes for storing unit business content data for each business unit as one-dimensional data among the business content data, the business content data representing the content of the business for each business unit in the business process; and the two-dimensional cubes for storing related business content data for each related business as the two-dimensional data in the content for each business represented by the one-dimensional data stored in the one-dimensional cubes, the related business content data integratively representing the content of predetermined related business performed over a plurality of business units. Therefore, it is possible to establish a system capable of making an inquiry into a variety of reports at a low cost without requiring a complex report program.

In other words, it is possible to establish a new database using an existing function of a data warehouse utilized to fulfill a complementary role for a core business server, and it becomes possible to establish a system capable of making an inquiry into a variety of reports by a simple configuration only for generating a program for managing information in the newly established database. Further, by enabling to manage business content data such as report data by means of a plurality of cubes forming a hierarchical structure, it is possible to reduce a work load for performing design development of cubes associated among complex businesses.

Further, in the embodiment described above, the database (for example, the cube group memory 100) is configured to include the multi-dimensional cubes for storing serial business content data for each of a series of businesses as multi-dimensional data, the serial business content data representing the content of a series of predetermined businesses in which the content of related business represented by the two-dimensional data stored in the two-dimensional cubes is integrated with the content of business represented by the one-dimensional data stored in the one-dimensional cubes or the content of other related business represented by other two-dimensional data. Therefore, it is possible to establish a system capable of making an inquiry into more various reports. Furthermore, by providing a plurality of multi-dimensional cubes in advance, it is possible to reduce a work load of the user to access necessary information.

Moreover, in the embodiment described above, the multi-dimensional data may be configured so as to contain serial business content data of a series of businesses including the content of another series of businesses represented by other multi-dimensional data. Therefore, it is possible to arrange and manage data among businesses having a more complex association with each other.

Further, in the embodiment described above, in the case where an arithmetic item is provided as an item in advance, it is possible to further reduce the work load for performing design development of cubes associated among complex businesses.

Further, in the embodiment described above, the database (for example, the cube group memory 100) is configured so as to be provided in the business content data management server (for example, the data warehouse server 300) for managing the business content data (for example, the report data), and the business content data management server is configured so as to: acquire unit business content data from a unit business content data management server (for example, the core business server 200) for collecting the unit business content data; register the acquired unit business content data as the one-dimensional data in the one-dimensional cube so as to update the registered content of the one-dimensional cube; and reflect the registration result of the registered one-dimensional data to the two-dimensional data, which are related business content data regarding related businesses so as to update the registered content of a two-dimensional cube in the case where there are the related businesses performed over a plurality of business units including the content of the business represented by the registered one-dimensional data. Therefore, it is possible to efficiently update the registered content of a plurality of cubes forming a hierarchical structure without omission, and it is possible to deal with a report inquiry request for various kinds of reports from a client quickly and accurately. In the case of including the multi-dimensional cubes, it becomes possible to deal with a report inquiry request for more various kinds of reports from the client quickly and accurately.

Furthermore, in the embodiment described above, the business content data management server (for example, the data warehouse server 300) provided with the database (for example, the cube group memory 100) is configured to provide the business content data stored in the database in response to a request from the client terminal (for example, the client 10 or 20), and provide the one-dimensional data or two-dimensional data designated by the client terminal. Therefore, it is possible to provide not only the one-dimensional data but also the two-dimensional data to the client, and it is possible to provide a variety of reports at a low cost without requiring a complex report program. In the case of including the multi-dimensional cubes, it is possible to provide more various kinds of reports at a low cost.

Moreover, in the embodiment described above, the business content data management server (for example, the data warehouse server 300) for managing the business content data representing the content of business in a business process is configured so as to: include the database (for example, the cube group memory 100) for storing the business content data; acquire unit business content data (for example, the slip data) from the unit business content data management server (for example, the core business server 200) for collecting the unit business content data for each business unit representing the content of each business for each business unit in the business process; store the acquired unit business content data in the database; and provide the business content data stored in the database in response to a request from the client terminal (for example, the client 10 or 20), and the database (for example, the cube group memory 100) is configured so as to include: the one-dimensional cubes for storing unit business content data of the business content data as one-dimensional data; and the two-dimensional cubes for storing related business content data for each related business as two-dimensional data in the content of each business represented by the one-dimensional data stored in the one-dimensional cubes, the related business content data integratively representing the content of predetermined related business performed over a plurality of business units, and the business content data management server is configured so as to provide at least a portion of the one-dimensional data or the two-dimensional data as business content data. Therefore, it is possible to establish a system capable of making an inquiry into a variety of reports at a low cost without requiring a complex report program.

### Industrial Applicability

According to the present invention, it is useful to provide a system capable of making an inquiry into a variety of reports at a low cost without requiring a complex report program.

### Explanation of Reference numerals

- 10: CLIENT
- 20: CLIENT
- 51: DEDICATED LINE
- 52: LAN
- 53: INTERNET
- 100: CUBE GROUP MEMORY
- 200: CORE BUSINESS SERVER
- 300: DWH SERVER
- 500: REPORT INQUIRY SYSTEM

## Claims

1. A database for storing business content data representing the content of business in a business process, the database comprising:
a one-dimensional data memory for storing unit business content data for each business unit as one-dimensional data among the business content data, the unit business content data representing the content of the business for each business unit in the business process; and
a two-dimensional data memory for storing related business content data for each related business as two-dimensional data in the content of each business represented by the one-dimensional data stored in the one-dimensional data memory, the related business content data integratively representing the content of predetermined related business performed over a plurality of business units.

2. The database according to claim 1, further comprising:
a multi-dimensional data memory for storing serial business content data for each of a series of businesses as multi-dimensional data, the serial business content data representing the content of a series of predetermined businesses in which the content of related business represented by the two-dimensional data stored in the two-dimensional data memory is integrated with the content of business represented by the one-dimensional data stored in the one-dimensional data memory or the content of other related business represented by other two-dimensional data.

3. The database according to claim 2, wherein the multi-dimensional data contain serial business content data of a series of businesses including the content of another series of businesses represented by other multi-dimensional data.

4. The database according to claim 1, wherein the database is provided in a business content data management server for managing the business content data, and
wherein the business content data management server comprises:
a unit business content data acquiring section that acquires unit business content data from a unit business content data management server for collecting the unit business content data;
a first updating section that registers, as one-dimensional data, the unit business content data acquired by the unit business content data acquiring section in the one-dimensional data memory so as to update registered content of the one-dimensional data memory; and
a second updating section that reflects a registration result of the one-dimensional data registered by the first updating section to two-dimensional data which are related business content data regarding related businesses so as to update registered content of the two-dimensional data memory in the case where there are related businesses performed over a plurality of business units including the content of the business represented by the one-dimensional data registered by the first updating section.

5. The database according to claim 4, wherein the business content data management server further comprises a business content data providing section that provides the business content data stored in the database in response to a request from a client terminal, and
wherein the business content data providing section provides one-dimensional data or two-dimensional data designated by the client terminal.

6. A business content data management server for managing business content data representing the content of business in a business process, the business content data management server comprising:
a database for storing the business content data;
a unit business content data acquiring section that acquires unit business content data from a unit business content data management server for collecting unit business content data for each business unit, the unit business content data representing the content of each business for each business unit in the business process;
a unit business content data storing section that stores the unit business content data acquired by the unit business content data acquiring section in the database; and
a business content data providing section that provides the business content data stored in the database in response to a request from a client terminal,
wherein the database comprises:
a one-dimensional data memory for storing the unit business content data of the business content data as one-dimensional data; and
a two-dimensional data memory for storing related business content data for each related business as two-dimensional data in the content of each business represented by the one-dimensional data stored in the one-dimensional data memory, the related business content data integratively representing the content of predetermined related business performed over a plurality of business units, and
wherein the business content data providing section provides at least a portion of the one-dimensional data or the two-dimensional data as the business content data.

7. A business content data management program for causing a business content data management server to manage business content data, the business content data management server comprising a database for storing the business content data representing the content of business in a business process, the business content data management program causing the business content data management server to execute:
a unit business content data acquiring process of acquiring unit business content data from a unit business content data management server for collecting unit business content data for each business unit, the unit business content data representing the content of each business for each business unit in the business process;
a unit business content data storing process of storing the unit business content data acquired through the unit business content data acquiring process in the database; and
a business content data providing process of providing the business content data stored in the database in response to a request from a client terminal,
wherein the database comprises:
a one-dimensional data memory for storing the unit business content data of the business content data as one-dimensional data; and
a two-dimensional data memory for storing related business content data for each related business as two-dimensional data in the content of each business represented by the one-dimensional data stored in the one-dimensional data memory, the related business content data integratively representing the content of predetermined related business performed over a plurality of business units, and
wherein the business content data providing process includes a process of providing at least a portion of the one-dimensional data or the two-dimensional data as the business content data.
